# EUROPEAN PATENT APPLICATION

(11) **EP 4 804 078 A1**
(43) Date of publication of application: **09.09.2026**
(21) Application number: 25382210.0
(22) Date of filing: 07.03.2025
(51) Int. Cl.: G06K 19/077, B32B 15/16

(54) **METHOD FOR RE-USING A RESIDUAL MATERIAL FROM A CARD BODY MANUFACTURING PROCESS**

(71) Applicant: Giesecke+Devrient ePayments GmbH, 81677 München (DE)
(72) Inventor: Gali, Josep, 08820 El Prat de Llobregat (Barcelona) (ES)
(74) Representative: LKGLOBAL Partnerschaftsgesellschaft mbB

(57) **Abstract**

The invention relates to a method for re-using a residual material (2) from a card body manufacturing process. The method comprises providing the residual material to a processing unit (110) and processing the residual material (2) to provide a re-usable material (12) based on the residual material (2). The method further comprises providing the re-usable material (12) to an antenna manufacturing unit (130) and applying an antenna element (14) to the re-usable material (12) in order to provide an antenna layer (16). The method further comprises providing the antenna layer (16) to a card body manufacturing unit (150) and manufacturing a multi-layered card body (10) which includes the antenna layer (16). The invention further relates the use of such a method for manufacturing a card-like data carrier.

## Description

The present invention generally relates to the recycling of left-over material portions from a card manufacturing process. In particular, the invention relates to a method for re-using a residual material from a card body manufacturing process as well as to a use of such a method for manufacturing a card-like data carrier.

The manufacturing of card bodies for card-like data carriers, for example smart cards, identification (ID) cards or payment cards like credit cards or debit cards, usually produces left-over material, e.g., waste material, which is necessarily created due to the manufacturing techniques and procedures. This left-over material sometimes cannot be used in the same manufacturing process since it might not have the required specificities and characteristics for that purpose. Furthermore, as the card bodies are typically made of plastic materials, there may be an environmental burden as a result of the waste from the card body manufacturing process. While it is generally possible to recycle plastic materials, it may be difficult to find an appropriate application of such a recycled material from a card body manufacturing process, in particular, an application where such a plastic material can be efficiently used and does not or only slightly affect the overall product quality.

It may be seen as an object of the invention to improve the re-use of residual materials from a card body manufacturing process.

A method according to the features of the independent claim is provided. Further embodiments of the invention are evident from the dependent claims, the Figures and the following description.

According to an aspect of the invention, a method for re-using, i.e., recycling, a residual material from a card body manufacturing process is provided. In a step of the method, the residual material is provided from the card body manufacturing process to a processing unit. In another step of the method, the residual material is processed at the processing unit in order to provide a re-usable material based on the residual material. In another step of the method, the re-usable material is provided to an antenna manufacturing unit. In another step of the method, the re-usable material is processed at the antenna manufacturing unit by applying an antenna element to the re-usable material in order to provide an antenna layer which comprises the antenna element and the re-usable material. In another step of the method, the antenna layer is provided to a card body manufacturing unit. In another step of the method, a multi-layered card body which includes the antenna layer is manufactured at the card body manufacturing unit. The method steps may be carried out in the indicated order.

The inventive method allows to re-use or recycle the residual material, e.g., a left-over material, that is created during a card body manufacturing process in an efficient and environmentally friendly way. In particular, the method improves the re-use of such a residual material by specifically processing the residual material, for example by re-shaping or re-structuring the residual material, in order to provide a re-usable material that can be efficiently used to manufacture an inlay (antenna) layer of a multi-layered card body. The inlay (antenna) layer which includes the antenna element will generally not or only slightly be visible from the outside of the finally produced multi-layered card body or card-like data carrier. For example, any undesired inks or other materials that are contained in the material composition of the residual material and thus the re-usable material for the inlay (antenna) layer might not be visible from the outside of the finally produced multi-layered card body or card-like data carrier. At least, the appearance of such inks or other materials may only slightly affect the overall appearance of the finally produced multi-layered card body or card-like data carrier.

In addition, any structural disadvantages, for example a reduced strength or stability of the inlay (antenna) layer that is based on said residual material an thus on said re-usable material, might not affect the overall strength or stability of the finally produced multi-layered card body or card-like data carrier since the inlay (antenna) layer is a relatively thin part of the card body that contributes to the strength or stability of the card body only to a limited amount. In particular, the neighboring layers between which the inlay (antenna) layer may be arranged in the finally produced multi-layered card body or card-like data carrier may contribute to the strength or stability of the overall product to a greater amount.

A first step of the recycling method may be the manufacturing process of one or more card bodies, for example card bodies that can be used to produce card-like data carriers. During this (first) manufacturing process, a residual material (so-called skeletons) will be generated due to the manufacturing techniques used for manufacturing the one or more card bodies. In particular, not all of the initially employed material may be present in the card bodies which are manufactured during the (first) card body manufacturing process. There may be a left-over material which is herein also referred to as residual material. This residual material may be collected during the (first) card body manufacturing process and may then be provided to the processing unit, with or without a prior treatment of the residual material. For example, the (first) card body manufacturing process may be carried out at a first card body manufacturing unit, wherein the first card body manufacturing unit may be a separate entity with respect to the processing unit. The residual material from the (first) card body manufacturing process may thus be delivered from the first card body manufacturing unit to the processing unit.

The residual material may then be processed at the processing unit in order to provide the re-usable material based on the residual material. The residual material may be re-shaped or re-structured to the re-usable material. This means that the re-usable material may have a different material structure or a different material shape when compared to the residual material, wherein the material composition may remain the same. For example, the processing unit may include an extruder in which the residual material may be extruded, or the processing unit may include a calender in which the residual material is calendered.

It is also possible that the processing at the processing unit involves a material modification in which one or more material components are separated from or added to the residual material in order to provide the re-usable material.

The re-usable material may then be provided to the antenna manufacturing unit where the antenna element is applied to the re-usable material in order to provide the antenna layer. This means that the re-usable material may be provided in a specific form/ shape so that the antenna element, for example an antenna coil, electrical conduits and/or another antenna component, may be applied to the re-usable material. The antenna element may be connected to, e.g., bonded to, a surface of the reusable-material or may be integrated into the re-usable material. The antenna layer may thus include or consist of the re-usable material and the antenna element. The antenna manufacturing unit may be a separate entity with respect to the processing unit. The re-usable material from the processing unit may thus be delivered from the processing unit to the antenna manufacturing unit.

The antenna layer may then be provided to the card body manufacturing unit, e.g., the above-mentioned first card body manufacturing unit or a second (different) card body manufacturing unit, where the multi-layered card body is manufactured. The multi-layered card body may comprise several layers, wherein one of these layers includes or constitutes the antenna layer which was manufactured by the antenna manufacturing unit. In particular, the antenna layer may be incorporated into the multi-layered card body, for example using a bonding process, a lamination process, etc. In the card body manufacturing unit, the final multi-layered card body which includes the antenna layer is produced. The card body manufacturing unit may be a separate entity with respect to the antenna manufacturing unit. The antenna layer from the antenna manufacturing unit may thus be delivered from the antenna manufacturing unit to the card body manufacturing unit.

The multi-layered card body manufactured in the card body manufacturing unit may be a card-like data carrier, for example a chip card, a smart card, an identification (ID) card or a payment card like a credit card or a debit card. The multi-layered card body manufactured in the card body manufacturing unit may also be used to produce such cards.

According to an embodiment, the residual material is provided from the card body manufacturing process by cutting one or more card bodies out of a multi-layered sheet, wherein the residual material is provided from a remaining portion of the multi-layered sheet after the one or more card bodies have been cut out of the multi-layered sheet.

This means that an initial or base sheet, for example a multi-layered base sheet may be used in the (first) card body manufacturing process and a cutting machine may cut out, e.g., punch out, a plurality of card bodies from this multi-layered sheet. On the one hand, this provides several card bodies that can be used as card-like data carriers or for producing such card-like data carriers. On the other hand, this cutting or punching process provides a left-over material portion of the multi-layered sheet that cannot be used anymore for manufacturing card bodies. This left-over material, i.e., the residual material, may be collected during the (first) card body manufacturing process and may then be delivered to the processing unit as described above.

According to an embodiment, the residual material provided from the card body manufacturing process comprises a combination of different material components.

For example, the residual material may be a composition of one or more plastics and one or more inks. This may be due to the fact that the multi-layered sheet from which the residual material is derived may contain different plastics in different layers. In addition, inks or other colored particles from an artwork may be contained in the multi-layered sheet or card bodies. Therefore, the residual material may comprise different materials. It is possible to separate at least some of these material components from each other to provide the re-usable material. However, it is also possible to use exactly this combination of different material components as derived from the (first) card body manufacturing process since additional materials like inks or other colored particles do not or only slightly affect the characteristics and appearance of the antenna layer which is manufactured from the re-usable material and thus from the residual material. At least, such additional materials like inks or other colored particles might not negatively influence the aesthetics of the final card body or card-like data carrier which includes this antenna layer.

According to an embodiment, the step of processing the residual material at the processing unit comprises manufacturing a foil based on the residual material, wherein providing the re-usable material to the antenna manufacturing unit comprises providing the foil to the antenna manufacturing unit, wherein processing the re-usable material at the antenna manufacturing unit comprises applying the antenna element to the foil in order to provide the antenna layer which comprises the antenna element and the foil.

This means that the residual material may be re-shaped in the processing unit such that the re-usable material appears in the form of a foil-like component. The antenna element may then be applied to a surface of the foil, for example by bonding it to the foil and/or by at least partially melting the foil. The antenna element may also be integrated into the foil. For example, the antenna element may be pressed at least partially in into foil material. In this step, the antenna element may be fixedly connected to the foil. The resulting antenna layer includes the foil and the antenna element.

According to an embodiment, the residual material is directly provided from the card body manufacturing process to the processing unit.

This means that the residual material might not be subjected to any treatment after the residual material has been derived from the (first) card body manufacturing process and before the residual material is delivered to the processing unit. In this case, no heat treatment and/or separation process to separate material components contained in the residual material may be provided. Instead, the residual material may be directly re-shaped or re-structured to the re-usable material, e.g., to the foil, as described above. In other words, the residual material, when being modified to the re-usable material, might not undergo any change in material composition and/or material characteristic, except a re-shaping or re-structuring.

According to an embodiment, the method further comprises treating the residual material at a treatment unit before providing the residual material to the processing unit.

This means that the residual material may be subjected to a particular treatment after the residual material has been derived from the card body manufacturing process and before the residual material is delivered to the processing unit. In this manner, the material characteristics of the residual material may be modified before it is delivered to the processing unit. The (first) card body manufacturing unit may be a separate entity with respect to the treatment unit. The residual material from the (first) card body manufacturing unit may thus be delivered from the (first) card body manufacturing unit to the treatment unit. Also, the treatment unit may be a separate entity with respect to the processing unit. The residual material from the treatment unit may thus be delivered from the treatment unit to the processing unit.

According to an embodiment, the step of treating the residual material at the treatment unit comprises applying a heat treatment to the residual material. Additionally or alternatively, the step of treating the residual material at the treatment unit comprises separating different material components contained in the residual material.

The treatment may comprise a heating treatment and/or a pressurization treatment. Furthermore, the treatment may comprise a material separation treatment in which a separation of material components contained in the residual material may be carried out. For example, an ink material and/or colored particles may be removed from the residual material such that only one plastic component remains. Furthermore, the treatment may comprise an addition of further materials, e.g., additives and/or plastics, to the residual material in order to specifically adjust the material properties of the residual material and thus later also the re-usable material, e.g., the foil.

According to an embodiment, treating the residual material at the treatment unit comprises providing the residual material in the form of pellets and/or granulate.

Providing the residual material to the processing unit in the form of pellets and/or granulate facilitates the processing of the residual material in the processing unit. In particular, newly produced plastic material for the purpose of card body manufacturing may usually be in the form of pellets and/or granulate such that the residual material which is also in the form of pellets and/or granulate can be more easily mixed or further processed together with the newly produced pellets and/or granulate at the processing unit. In particular, the re-usable material, e.g., the foil, may be generated based on a combination of the pellets/granulate of the residual material recycled from the (first) card body manufacturing process on the one hand and any newly produced pellets and/or granulate which does not stem from a recycling process.

According to an embodiment, the step of manufacturing the multi-layered card body at the card body manufacturing unit comprises arranging the antenna layer between a first card layer and a second card layer.

In other words, the antenna layer which contains the re-usable material that is based on the recycled residual material may be integrated within the finally created multi-layered card body such that the antenna layer is not or only slightly visible from the outside of the finally created multi-layered card body. Therefore, it might not be necessary to separate any inks or colored particles from the residual material before it is re-used for manufacturing the multi-layered card body. Furthermore, the stability of the overall multi-layered card body might not be negatively affected by the incorporation of the relatively thin antenna layer within the multi-layered card body.

According to an aspect, a use of the inventive method as described herein for manufacturing a card-like data carrier is provided.

In particular, the inventive method which may be considered as a recycling method may be used as a part of a manufacturing process in which the card-like data carrier, for example a chip card, a smart card, an identification (ID) card or a payment card like a credit card or a debit card, is manufactured.

Exemplary embodiments of the invention are explained in more detail below with reference to schematic drawings.
- Fig. 1: shows a schematic representation of a sheet with card body cutouts and residual material portions.
- Fig. 2: shows a card body including an antenna layer that was manufactured on the basis of a residual material.
- Fig. 3: shows a flow diagram of a method for re-using a residual material from a card body manufacturing process.
- Fig. 4: shows different units used for carrying out the method as described with respect to Fig. 3.

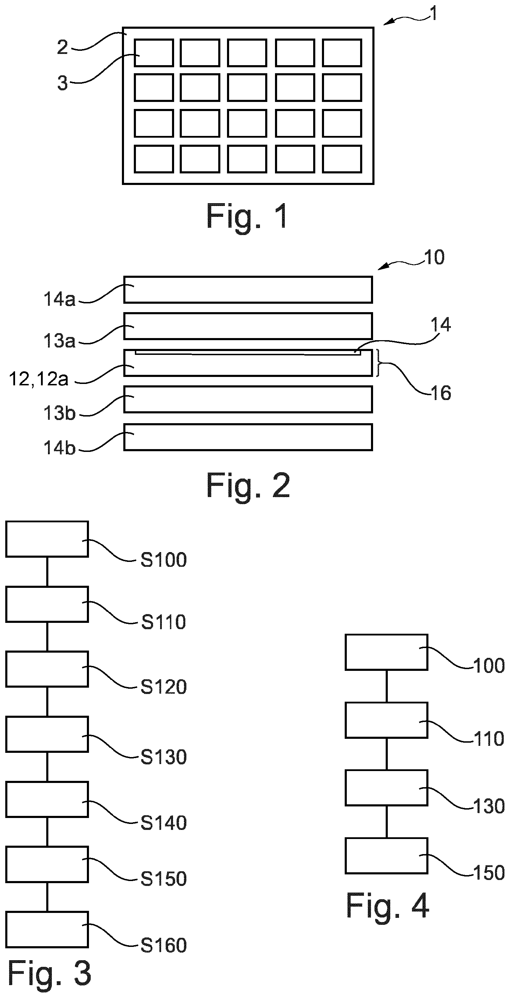

Fig. 1 shows an initial sheet 1 or base sheet 1, for example a multi-layered base sheet 1. The sheet 1 may be the starting point for cutting out, e.g., punching out, a plurality of card bodies 3 during a first card body manufacturing process. This first card body manufacturing process may be carried out at a first card body manufacturing unit. Cutting out the card bodies 3 may result in several cutouts in the sheet 1, wherein a remaining portion of the sheet 1 surrounding the created cutouts may constitute a residual material 2 which is herein also referred to as skeleton.

In an example, a cutting machine may cut out, e.g., punch out, the plurality of card bodies 3 from the sheet 1. Therefore, on the one hand, there are provided several card bodies 3 that can be used as card-like data carriers or for producing such card-like data carriers. On the other hand, the cutting or punching process provides a left-over material portion 2 of the sheet 1 that might not be used anymore for manufacturing card bodies 3. This left-over material 2, i.e., the residual material 2, may be collected during the first card body manufacturing process and may then be delivered to a processing unit.

Since the card bodies 3 were cut out from the sheet 1 so that the residual material 2 remains, the residual material 2 may have the same material composition as the card bodies 3. In particular, the card bodies 3 and/or the residual material 2 may include at least one of the following: one or more plastic material components, one or more ink material components, one or more lacquer material components, one or more artwork components, one or more colored particles, or one or more adhesives. In other words, the card bodies 3 and thus the residual material 2 may be a mixture of multiple material components.

Fig. 2 shows a card body 10 including an antenna layer 16 that was manufactured on the basis of the residual material 2 obtained from the first card body manufacturing process as described with respect to Fig. 1.

In particular, the card body 10 of Fig. 2 may be provided based on a method for re-using the residual material 2 from the first card body manufacturing process. In a first step, the residual material 2 may be provided from the first card body manufacturing process to a processing unit where the residual material 2 may be modified, e.g., re-shaped, re-structured and/or re-composed, to a re-usable material 12. For example, the residual material 2 may be modified at the processing unit such that a foil 12a, which represents the re-usable material 12, is manufactured based on the residual material 2.

In a further step, which may be carried out at an antenna manufacturing unit, an antenna element 14 may be applied to this re-usable material 12, e.g., to the foil 12a. In particular, the antenna element 14 may be connected with, e.g., bonded to, the re-usable material 12, e.g., to the foil 12a. The antenna element 14 and the re-usable material 12 together may form an antenna layer 16 which may be used as an inlay layer for manufacturing a card body 10 in a second card body manufacturing process.

Therefore, in a further step, the antenna layer 16 may be provided to the first card body manufacturing unit where the residual material 2 has been obtained, or to a second card body manufacturing unit that is different from the first card body manufacturing unit. In the first or second card body manufacturing unit, the multi-layered card body 10 which includes the antenna layer 16 may be manufactured. In particular, a first layer 13a, for example a first printable layer 13a, may be applied onto a first side of the antenna layer 16, whereas a second layer 13b, for example a second printable layer 13b, may be applied onto a second side of the antenna layer 16. Furthermore, a first overlay layer 14a may be applied onto the first printable layer 13a and a second overlay layer 14b may be applied onto the second layer 13b. Further layers may be integrated into multi-layered card body 10 during the manufacturing thereof. In this manner, the re-usable material 12 which has been derived from the first card body manufacturing process (cf. Fig. 1) may be used, for example as the foil 12a and as part of the antenna layer 16, to manufacture the card body 10 in the second card body manufacturing process.

It is noted that a treatment step may be provided before the residual material 2 is processed, i.e., after the residual material 2 has been obtained in the first card body manufacturing process (cf. Fig. 1). The treatment of the residual material 2 at the treatment unit may comprise applying a heat treatment and/or a pressure treatment to the residual material 2, thereby modifying the material characteristics of the residual material 2 before processing thereof. The treatment of the residual material 2 at the treatment unit may also comprise separating different material components contained in the residual material 2 from each other. As described with respect to Fig. 1 above, the residual material 2 may include at least one of a plastic material component, an ink material component, a lacquer material component, an artwork component, colored particles, or an adhesive. Some or all of these components may be separated from each other during the treatment process at the treatment unit such that only desired materials are contained in the treated residual material 2 which is further processed to the re-usable material 12 in the processing unit afterwards.

Fig. 3 shows a flow diagram of a method for re-using a residual material 2 from a (first) card body manufacturing process and Fig. 4 shows different units used for carrying out the method as described with respect to Fig. 3. Figures 3 and 4 will now be described in relation to each other.

A step S110 of the method comprises providing the residual material 2 from the (first) card body manufacturing process to a processing unit 110. The provision of the residual material 2 may be achieved as described with respect to Fig. 1 above. In particular, the residual material 2 may be obtained from remaining portions of a sheet 1, for example remaining portions of a multi-layered sheet 1, surrounding created cutouts in this sheet 1. Such remaining material portions may be referred to as skeletons.

In an optional step S100, the method may comprise treating the residual material 2 at a treatment unit 100 before providing the residual material 2 to the processing unit 110, i.e., before step S110.

Another step S120 of the method comprises processing the residual material 2 at the processing unit 110 in order to provide a re-usable material 12 based on the residual material 2.

Another step S130 of the method comprises providing the re-usable material 12 to an antenna manufacturing unit 130.

Another step S140 of the method comprises processing the re-usable material 12 at the antenna manufacturing unit 130 by applying an antenna element 14 to the re-usable material 12 in order to provide an antenna layer 16 which comprises the antenna element 14 and the re-usable material 12.

Another step S150 of the method comprises providing the antenna layer 16 to a (second) card body manufacturing unit 150.

Another step S160 of the method comprises manufacturing a multi-layered card body 10 which includes the antenna layer 16 at the (second) card body manufacturing unit 150. The manufacturing of the multi-layered card body 10 may be achieved as described with respect to Fig. 2 above.

In other words, the method allows the residual material 2, i.e., the skeletons, to be added to the card body manufacturing loop again. The method may lead to a situation in which the re-used material might appear in different colors within the finally manufactured card body 10, however this is not considered critical in the relatively thin inlay (antenna) layer 16 since it is difficult to notice in the thinner part of the card body 10. Furthermore, the usage of recycled material for the inlay (antenna) layer 16 might result in a less mechanical stability in the card body 10. However, the inlay (antenna) layer 16 is the thinner part of the final card body 10, wherein the other (covering) layers can be used to compensate any possible reduction in stability.

## Claims

1. A method for re-using a residual material (2) from a card body manufacturing process, comprising:
providing the residual material (2) from the card body manufacturing process to a processing unit (110, S110);
processing the residual material (2) at the processing unit (110) in order to provide a re-usable material (12) based on the residual material (2, S120);
providing the re-usable material (12) to an antenna manufacturing unit (130, S130);
processing the re-usable material (12) at the antenna manufacturing unit (130) by applying an antenna element (14) to the re-usable material (12) in order to provide an antenna layer (16) which comprises the antenna element (14) and the re-usable material (12, S140);
providing the antenna layer (16) to a card body manufacturing unit (150, S150);
manufacturing a multi-layered card body (10) which includes the antenna layer (16) at the card body manufacturing unit (150, S160).

2. The method according to claim 1,
wherein the residual material (2) is provided from the card body manufacturing process by cutting one or more card bodies (3) out of a multi-layered sheet (1);
wherein the residual material (2) is provided from a remaining portion of the multi-layered sheet (1) after the one or more card bodies (3) have been cut out of the multi-layered sheet (1).

3. The method according to any one of the preceding claims,
wherein the residual material (2) provided from the card body manufacturing process comprises a combination of different material components.

4. The method according to any one of the preceding claims,
wherein processing the residual material (2) at the processing unit (110) comprises manufacturing a foil (12a) based on the residual material (2);
wherein providing the re-usable material (12) to the antenna manufacturing unit (130) comprises providing the foil (12a) to the antenna manufacturing unit (130);
wherein processing the re-usable material (12) at the antenna manufacturing unit (130) comprises applying the antenna element (14) to the foil (12a) in order to provide the antenna layer (16) which comprises the antenna element (14) and the foil (12a).

5. The method according to any one of the preceding claims,
wherein the residual material (2) is directly provided from the card body manufacturing process to the processing unit (110).

6. The method according to any one of claims 1 to 4, comprising:
treating the residual material (2) at a treatment unit (100) before providing the residual material (2) to the processing unit (110, S100).

7. The method according to claim 6,
wherein treating the residual material (2) at the treatment unit (100) comprises applying a heat treatment to the residual material (2); and/or
wherein treating the residual material (2) at the treatment unit (100) comprises separating different material components contained in the residual material (2).

8. The method according to any one of claims 6 to 7,
wherein treating the residual material (2) at the treatment unit (100) comprises providing the residual material (2) in the form of pellets and/or granulate.

9. The method according to any one of the preceding claims,
wherein manufacturing the multi-layered card body (10) at the card body manufacturing unit (150) comprises arranging the antenna layer (16) between a first card layer (13a) and a second card layer (13b).

10. A use of a method according to any one of the preceding claims for manufacturing a card-like data carrier.
